(19) Europäisches Patentamt
European Patent Office
Office européen des brevets

(11) EP 2 368 956 A1

(12) EUROPÄISCHE PATENTANMELDUNG

(43) Veröffentlichungstag:
**28.09.2011 Patentblatt 2011/39**

(51) Int Cl.:
***C09J 163/00*** (2006.01) ***C09J 175/00*** (2006.01)

(21) Anmeldenummer: **10158077.7**

(22) Anmeldetag: **26.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **Sika Technology AG**
**6340 Baar (CH)**

(72) Erfinder:
- **GÖSSI, Matthias**
  **8610, Uster (CH)**
- **FINTER, Jürgen**
  **8037, Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

# (54) Formgedächtnis-Material auf Basis eines Strukturklebstoffs

(57) Die vorliegende Erfindung betrifft eine Zusammensetzung umfassend
a) mindestens einen härtbaren Strukturklebstoff, sowie
b) mindestens ein chemisch vernetztes Elastomer, wobei das Elastomer als durchdringendes Polymernetzwerk im Strukturklebstoff vorliegt.

Eine derartige Zusammensetzung stellt ein sogenanntes Formgedächtnis-Material dar und eignet sich zur Verstärkung von Hohlräumen in strukturellen Bauteilen, wie beispielsweise in Automobilkarosserien.

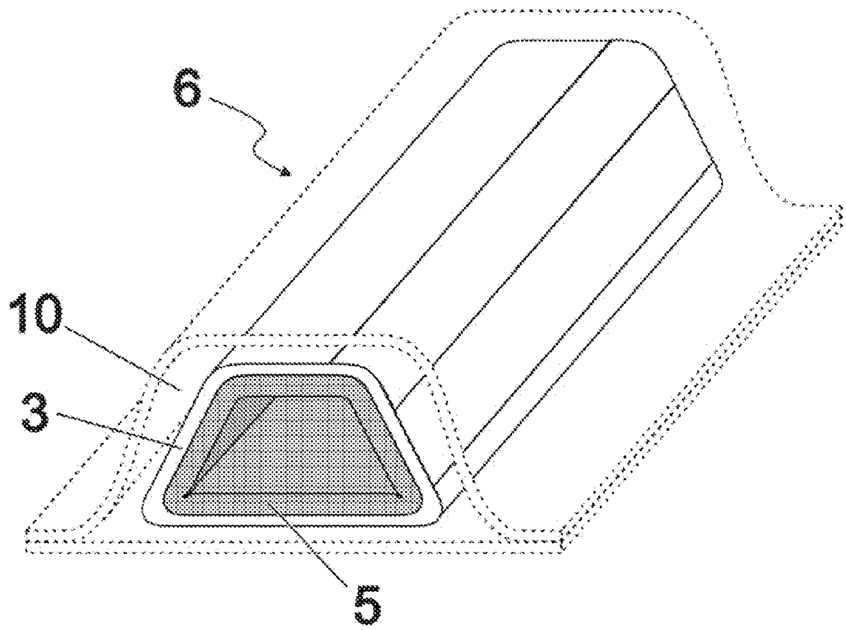


Figur 5

EP 2 368 956 A1

## Beschreibung

### Technisches Gebiet

Die Erfindung liegt auf dem Gebiet der Zusammensetzungen umfassend härtbare Strukturklebstoffe, welche als so genannte Formgedächtnis-Materialien ausgebildet sind. Weiterhin betrifft die Erfindung ein Verstärkungselement zur Verstärkung in Hohlräumen von strukturellen Bauteilen, wie sie beispielsweise bei Automobilkarosserien und dergleichen eingesetzt werden.

### Stand der Technik

Oftmals werden bei Konstruktionen jeglicher Art hohlräumige strukturelle Bauteile eingesetzt. Diese Bauweise erlaubt es, das Gewicht der Konstruktion und den Materialaufwand niedrig zu halten, jedoch gehen bei dieser Bauweise häufig auch Stabilität und Festigkeit verloren. Die Hohlräume bieten zudem, aufgrund der grösseren Oberfläche des hohlen Bauteils, eine grössere Angriffsfläche für Korrosion, falls Feuchtigkeit oder Schmutz in sie eindringt. Ebenfalls können Geräusche, die beispielsweise durch Wind oder Vibrationen verursacht werden, in oder entlang der Hohlräume übertragen werden.

Aufgrund der Form und/oder des engen Ausmasses solcher Hohlräume ist es vielfach schwierig diese effizient zu verstärken, abzudichten oder die Geräuschübertragung einzudämmen.

Insbesondere um die mechanischen Eigenschaften hohlräumiger struktureller Bauteile zu verbessern, ist es weitgehend üblich, lokale Verstärkungselemente in die Bauteile einzusetzen oder einzubauen. Derartige Verstärkungselemente bestehen typischerweise aus Metallen oder Kunststoffen oder aus Kombinationen dieser Werkstoffe. An schwer zugänglichen Stellen, welche beispielsweise erst nach der Montage des Bauteils verstärkt oder abgedichtet werden sollen, werden häufig auch Strukturschäume eingesetzt. Dies ist etwa bei der Herstellung von Fahrzeugstrukturen bzw. Karosserien, der Fall. Der Vorteil der Strukturschäume ist, dass sie im nicht expandierten Zustand in einem Hohlraum montiert werden können und später, vor allem durch Temperaturerhöhung geschäumt werden können. So kann beispielsweise die Innenwand des Hohlraums auch nach der Montage des Verstärkungselements mittels kathodischer Tauchlackierung (KTL) vollständig beschichtet und erst danach durch Schäumung des Strukturklebstoffs verstärkt werden. Die Schäumung erfolgt dabei typischerweise während der Härtung der KTL-Schicht im Ofen.

Der Nachteil derartiger Verstärkungselemente ist, dass die mechanischen Eigenschaften des Strukturklebstoffs mit dem Schäumungsvorgang beeinträchtigt werden.

### Darstellung der Erfindung

Die Aufgabe der vorliegenden Erfindung ist es daher, ein Verstärkungselement zur Verfügung zu stellen, welcher die Nachteile des Standes der Technik überwindet und es erlaubt, einen Spalt zwischen Hohlraum und Verstärkungselement zu schliessen, ohne dass dabei die mechanischen Eigenschaften des Strukturklebstoffs beeinträchtigt werden.

Überraschenderweise wurde gefunden, dass mit Zusammensetzungen gemäss Anspruch 1 diese Aufgabe gelöst werden kann.

Es wurde gefunden, dass sich mit erfindungsgemässen Zusammensetzungen Formgedächtnis-Materialien realisieren lassen, welche insbesondere durch Temperatureinfluss ihre Form ändern und somit in eine gewünschte Richtung expandieren, ohne dass dabei eine Volumenzunahme, beispielsweise durch einen Schäumungsvorgang, einhergeht.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:

- Figur 1 eine schematische Darstellung der Herstellung eines Formkörpers bzw. einer Zusammensetzung in ihrer temporären Form;
- Figur 2 eine schematische Darstellung Verstärkungselements;
- Figur 3 eine schematische Darstellung der Formänderung und Aushärtung der Zusammensetzung;

Figur 4 eine schematische Darstellung der Verstärkung eines Hohlraums eines strukturellen Bauteils;
Figur 5 eine schematische Darstellung eines Verstärkungselements in einem Hohlraum eines strukturellen Bauteils;
Figur 6 eine schematische Darstellung eines verstärkten strukturellen Bauteils.

In den Figuren sind nur die für das unmittelbare Verständnis der Erfindung wesentlichen Elemente gezeigt.

**Wege zur Ausführung der Erfindung**

Die vorliegende Erfindung betrifft in einem ersten Aspekt eine Zusammensetzung umfassend

i) mindestens einen härtbaren Strukturklebstoff; sowie
ii) mindestens ein chemisch vernetztes Elastomer;
wobei, das chemisch vernetzte Elastomer als durchdringendes Polymernetzwerk im Strukturklebstoff vorliegt.

Der Term "durchdringendes Polymernetzwerk" wird im vorliegenden Dokument in Anlehnung an die Definition eines "Semi-interpenetrierenden Polymernetzwerks" (semi-interpenetrating polymer network (SIPN)) gemäss IUPAC Compendium of Chemical Terminology, 2nd Edition (1997) verwendet. Demnach umfasst das SIPN mindestens ein Netzwerk sowie mindestens ein lineares oder verzweigtes Polymer, wobei dieses Polymer das Netzwerk zumindest teilweise durchdringt. In der erfindungsgemässen Zusammensetzung bildet das Elastomer das Netzwerk, das Polymer ist Bestandteil des härtbaren Strukturklebstoffs.

Als Glasübergangstemperatur Tg einer Zusammensetzung wird im vorliegendem Dokument die Glasübergangstemperatur des härtbaren Strukturklebstoffs, also insbesondere des Epoxidharzes **A**, oder die Glasübergangstemperatur des chemisch vernetzten Elastomers verstanden, je nachdem welche der beiden höher liegt. Bei Ausführungsformen mit einem härtbaren Strukturklebstoff auf Basis eines Epoxid-Festharzes bezieht sich die Glasübergangstemperatur Tg der Zusammensetzung in der Regel auf die Glasübergangstemperatur Tg des Epoxid-Festharzes. Bei Ausführungsformen mit einem härtbaren Strukturklebstoff auf Basis eines Epoxid-Flüssigharzes bezieht sich die Glasübergangstemperatur Tg der Zusammensetzung in der Regel auf die Glasübergangstemperatur Tg des chemisch vernetzten Elastomers.

Die erfindungsgemässe Zusammensetzung, welche ein "Formgedächtnis-Material" ("shape memory material") darstellt, kann bei ihrer Herstellung oder Verarbeitung in eine bestimmte Form ("ursprüngliche Form") gebracht werden und weist nach dieser Formgebung eine feste Konsistenz auf, das heisst, dass die Zusammensetzung bei einer Temperatur unterhalb ihrer Glasübergangstemperatur Tg vorliegt. In dieser Form liegt das chemisch vernetzte Elastomer, welches als durchdringendes Polymernetzwerk im Strukturklebstoff vorliegt, im Wesentlichen entspannt vor. Bei Bedarf wird die Zusammensetzung dann auf eine Temperatur über ihre Glasübergangstemperatur Tg erwärmt und in eine beliebige Form ("temporäre Form") gebracht. In dieser temporären Form liegt das chemisch vernetzte Elastomer in einer gespannten Form vor. Die Zusammensetzung wird in dieser temporären Form gehalten und die Temperatur der Zusammensetzung wird wieder unter ihre Glasübergangstemperatur Tg gesenkt, wodurch sich die Zusammensetzung in der temporären Form verfestigt. In dieser temporären Form ist die Zusammensetzung lagerstabil und kann einer Verarbeitung, beispielsweise Stanzen oder Schneiden, unterzogen werden. Wird die Zusammensetzung zu einem späteren Zeitpunkt wieder auf eine Temperatur erwärmt, welche über ihrer Glasübergangstemperatur Tg liegt, bringt sich das Elastomer wieder in seine entspannte Form und verformt somit die gesamte Zusammensetzung in ihre ursprüngliche Form.

Insbesondere handelt es sich bei der erfindungsgemässen Zusammensetzung um ein Formgedächtnis-Material, welches bei Raumtemperatur (23°C) fest ist, was eine optimale Handhabung des Materials in seiner ursprünglichen und in seiner temporären Form erlaubt.

Damit die erfindungsgemässe Zusammensetzung bei Raumtemperatur fest ist, sollte sie eine Glasübergangstemperatur Tg, aufweisen, welche über der Raumtemperatur liegt. Ansonsten könnte die erfindungsgemässe Zusammensetzung, nachdem sie in ihre temporäre Form gebracht wurde, das in dieser temporären Form angespannte Elastomer, bei Raumtemperatur nicht in dieser Form halten.

Vorzugsweise weist die erfindungsgemässe Zusammensetzung eine Glasübergangstemperatur Tg im Bereich von 23°C bis 95°C, insbesondere von 30°C bis 80°C, bevorzugt von 35°C bis 75°C, auf.

Weiterhin bevorzugt ist die Oberfläche der erfindungsgemässen Zusammensetzung bei Raumtemperatur nicht klebrig, was ihre Handhabung erleichtert.

Beim härtbaren Strukturklebstoff handelt es sich insbesondere um einen hitzehärtenden Strukturklebstoff, welcher vorzugsweise eine Aushärtungstemperatur im Bereich von 120°C bis 220°C, insbesondere 160°C bis 200°C, aufweist.

Handelt es sich beim härtbaren Strukturklebstoff um einen hitzehärtenden Strukturklebstoff, muss bei der Verarbeitung der Zusammensetzung, bei welcher sie in ihre temporäre Form gebracht wird, darauf geachtet werden,

dass die Zusammensetzung nicht soweit erwärmt wird, dass der Aushärtungsvorgang einsetzt.

Meist bevorzugt ist der härtbare Strukturklebstoff eine Epoxidharzzusammensetzung umfassend mindestens ein Epoxidharz **A** und mindestens einen Härter **B** für Epoxidharze, welcher durch erhöhte Temperatur aktiviert wird. Insbesondere handelt es sich dabei um eine einkomponentige Epoxidharzzusammensetzung.

Das Epoxidharz **A**, weist durchschnittlich mehr als eine Epoxidgruppe pro Molekül auf und ist insbesondere ein Epoxid-Festharz oder eine Mischung eines Epoxid-Festharzes mit einem Epoxid-Flüssigharz. Der Begriff "Epoxid-Festharz" ist dem Epoxid-Fachmann bestens bekannt und wird im Gegensatz zu "Epoxid-Flüssigharz" verwendet. Die Glasübergangstemperatur Tg von Festharzen liegt über Raumtemperatur.

Bevorzugte Epoxid-Festharze weisen die Formel (I) auf.

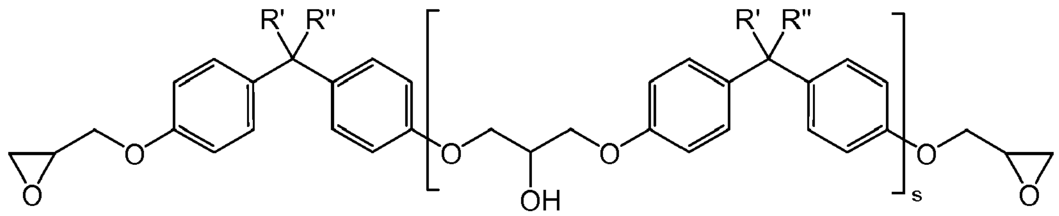

(I)

Hierbei stehen die Substituenten R' und R" unabhängig voneinander entweder für H oder $CH_3$. Weiterhin steht der Index s für einen Wert von ≥ 1, insbesondere von ≥ 1.5, bevorzugt von 2 bis 12.

Bevorzugte Epoxid-Festharze weisen eine Glasübergangstemperatur Tg im Bereich von 23°C bis 95°C, insbesondere von 30°C bis 80°C, bevorzugt von 35°C bis 75°C, auf.

Derartige Epoxid-Festharze sind beispielsweise kommerziell erhältlich von Dow Chemical Company, USA, von Huntsman International LLC, USA, oder von Hexion Specialty Chemicals Inc, USA.

Bevorzugte Epoxid-Flüssigharze, welche insbesondere zusammen mit einem Epoxid-Festharz verwendet werden können, weisen die Formel (II) auf.

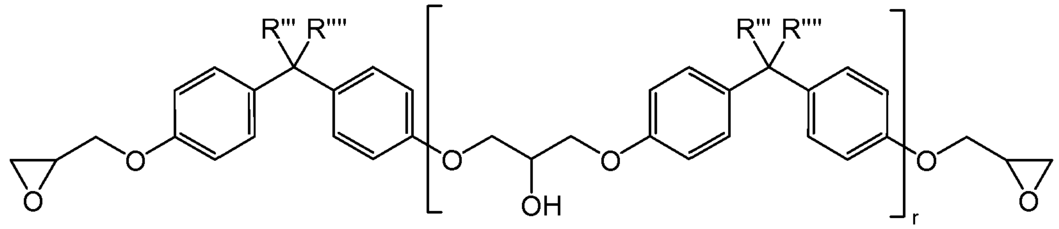

(II)

Hierbei stehen die Substituenten R'" und R"" unabhängig voneinander entweder für H oder $CH_3$. Weiterhin steht der Index r für einen Wert von 0 bis 1. Bevorzugt steht r für einen Wert von ≤ 0.2.

Es handelt sich somit vorzugsweise um Diglycidylether von Bisphenol-A (DGEBA), von Bisphenol-F sowie von Bisphenol-A/F. Die Bezeichnung "A/F" verweist hierbei auf eine Mischung von Aceton mit Formaldehyd, welche als Edukt bei dessen Herstellung verwendet wird. Solche Flüssigharze sind beispielsweise unter den Handelsnamen Araldite® GY 250, Araldite® PY 304, Araldite® GY 282 von Huntsman International LLC, USA, oder D.E.R.® 331 oder D.E.R.® 330 von Dow Chemical Company, USA, oder unter dem Handelsnamen Epikote® 828 oder Epikote® 862 von Hexion Specialty Chemicals Inc, USA, kommerziell erhältlich.

Je nach Ausführungsform kann es sich beim Epoxidharz, welches als eine der Ausgangsverbindungen in härtbaren Strukturklebstoff eingesetzt wird, auch um ein Epoxid-Flüssigharz handeln. Dies ist typischerweise dann der Fall, wenn der härtbare Strukturklebstoff zur Ausbildung eines Formgedächtnis-Materials mindestens ein chemisch vernetztes Elastomer umfasst, wobei die chemische Vernetzung der polymeren Bestandteile zur Herstellung dieses Elastomers, also der elastomeraufbauenden Komponenten, zu einer Erhöhung der Glasübergangstemperatur Tg der Zusammensetzung führt, sodass diese im, für die Handhabung des Materials, geeigneten Bereich liegt. Dies ist beispielsweise der Fall, wenn das chemisch vernetzte Elastomer zumindest teilweise aus dem eingesetzten Epoxid-Flüssigharz aufgebaut wird.

Weitere geeignete Epoxidharze sind sogenannte Novolake. Diese weisen insbesondere die folgende Formel (III) auf.

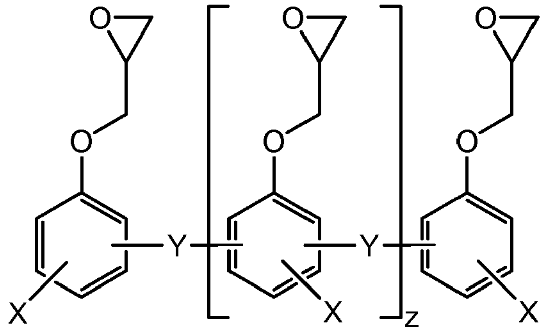

(III)

Dabei steht der Rest X für ein Wasserstoffatom oder für eine Methylgruppe. Der Rest Y steht für $-CH_2-$ oder für einen Rest der Formel (IV).

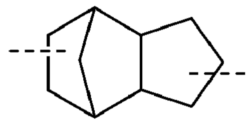

(IV)

Weiterhin steht der Index z für einen Wert von 0 bis 7, insbesondere für einen Wert von ≥ 3.

Insbesondere handelt es sich hierbei um Phenol- oder Kresol-Novolake (Y steht für $-CH_2-$).

Derartige Epoxidharze sind unter dem Handelsnamen EPN oder ECN sowie Tactix® 556 von Huntsman International, LLC, USA, oder unter der Produktreihe D.E.N.™ von Dow Chemical Company, USA, kommerziell erhältlich.

Bevorzugt stellt das Epoxidharz **A** ein Epoxid-Festharz der Formel (I) dar. In einer ebenfalls bevorzugten Ausführungsform enthält die hitzehärtende Epoxidharzzusammensetzung sowohl mindestens ein Epoxid-Festharz der Formel (I) als auch mindestens ein Epoxid-Flüssigharz der Formel (II).

Der Anteil von Epoxidharz **A** beträgt vorzugsweise 2 bis 90 Gew.-%, insbesondere 5 bis 70 Gew.-%, bevorzugt 10 bis 60 Gew.-%, bezogen auf das Gesamtgewicht des härtbaren Strukturklebstoffs.

Der Härter **B** für Epoxidharze wird durch erhöhte Temperatur aktiviert. Bevorzugt handelt es sich beim Härter **B** um einen Härter, ausgewählt aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), sowie Imidazole und Amin-Komplexe. Besonders bevorzugt als Härter **B** ist Dicyandiamid, insbesondere in Kombination mit einem substituierten Harnstoff. Der Vorteil der Kombination von Dicyandiamid mit einem substituierten Harnstoff liegt in der dadurch erzielten beschleunigten Aushärtung der Zusammensetzung.

Der Anteil des Härters **B** beträgt vorzugsweise 0.05 bis 8 Gew.-%, insbesondere 0.1 bis 6 Gew.-%, bevorzugt 0.2 bis 5 Gew.-%, bezogen auf das Gesamtgewicht des härtbaren Strukturklebstoffs.

Der Begriff "Härter" schliesst im vorliegenden Dokument auch Katalysatoren und katalytisch wirkende Verbindungen mit ein. Dem Fachmann ist in diesem Fall klar, dass beim Einsatz eines Katalysators oder einer katalytisch wirkenden Verbindung als Härter **B**, der Anteil der Härters **B** am gesamten härtbaren Strukturklebstoff im unteren Bereich des angegebenen Wertebereichs liegt.

Zusätzlich kann die Epoxidharzzusammensetzung mindestens ein Schlagzähigkeitsmodifikator umfassen.

Unter einem "Schlagzähigkeitsmodifikator" wird in diesem Dokument ein Zusatz eines organischen Polymers zu einer Epoxidharzmatrix verstanden, der bereits in geringen Mengen, d.h. von typischerweise zwischen 0.1 und 20 Gew.-%, eine deutliche Zunahme der Zähigkeit bewirkt und somit in der Lage ist, höhere Schlag- oder Stossbeanspruchung aufzunehmen, bevor die Matrix einreisst oder bricht.

Als Schlagzähigkeitsmodifikatoren eignen sich insbesondere reaktive Flüssigkautschuke auf Basis von Nitrilkautschuk oder Derivate von Polyetherpolyol-Polyurethanen, Core-Shell Polymere und ähnliche dem Fachmann bekannte Systeme.

Geeignete Schlagzähigkeitsmodifikatoren sind als Schlagzähigkeitsmodifikatoren **D** beschrieben in der europäischen Patentanmeldung mit der Anmeldenummer EP08168009.2, deren Inhalt hiermit durch Bezugnahme eingeschlossen wird.

Der härtbare Strukturklebstoff kann weitere Bestandteile enthalten, wie sie üblicherweise in härtbaren Strukturklebstoffen eingesetzt werden.

Insbesondere enthält der härtbare Strukturklebstoff zusätzlich mindestens einen Füllstoff. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint. Ein weiteres Beispiel sind funktionalisierte Alumoxane, wie sie z. B. in US 6,322,890 beschrieben sind und deren Inhalt hiermit durch Bezugnahme eingeschlossen wird.

Vorteilhaft beträgt der Anteil des Füllstoffs 1 bis 60 Gew.-%, vorzugsweise 5 bis 50 Gew.-%, insbesondere 10 bis 35 Gew.-%, bezogen auf das Gewicht des gesamten härtbaren Strukturklebstoffs.

Als weitere Bestandteile umfasst der härtbare Strukturklebstoff insbesondere auch Thixothropierungsmittel wie beispielsweise Aerosile oder Nanoclays, Zähigkeitsmodifikatoren, Reaktivverdünner sowie weitere dem Fachmann bekannte Bestandteile.

Meist bevorzugt handelt es sich beim härtbaren Strukturklebstoff um eine einkomponentige, hitzehärtende Epoxidharzzusammensetzung.

Die erfindungsgemässe Zusammensetzung weist mindestens ein chemisch vernetztes Elastomer auf, welches als durchdringendes Polymernetzwerk im Strukturklebstoff vorliegt.

Das chemisch vernetzte Elastomer wird dadurch in die Zusammensetzung eingebracht, dass elastomeraufbauende Komponenten mit dem härtbaren Strukturklebstoff vermischt und dann in der Mischung vernetzt werden, sodass ein durchdringendes Polymernetzwerk im Strukturklebstoff entsteht.

Als elastomeraufbauende Komponenten können dabei beliebige Komponenten eingesetzt werden, die in der Mischung mit dem härtbaren Strukturklebstoff kontrolliert zu einem Elastomer vernetzt werden können, ohne dass dabei der härtbare Strukturklebstoff in seiner Funktion beeinträchtigt wird.

Insbesondere sind die elastomeraufbauenden Komponenten ausgewählt aus der Gruppe bestehend aus

- mindestens einem natürlichen oder synthetischen Kautschuk sowie mindestens einem Vernetzer für Kautschuk; und
- mindestens einem Polyisocyanat sowie mindestens einem Polyol.

Neben natürlichem Kautschuk, also Polyisopren, eignen sich typischerweise synthetische Kautschuke wie Styrol-Butadien-Kautschuk, Polybutadien-Kautschuk, Acrylnitril-Butadien-Kautschuk, insbesondere mit einem Acrylnitrilanteil von $\geq$ 25 mol-%, Chloropren-Kautschuk und Ethylen-Propylen-Dien-Kautschuk.

Die Vernetzung kann dabei mit Schwefel, radikalisch oder auf eine andere, dem Fachmann bekannte Art und Weise, erfolgen.

Weiterhin können die elastomeraufbauenden Komponenten Polyisocyanate und Polyole sein, wie sie dem Fachmann bestens bekannt sind. Insbesondere handelt es sich bei den Polyisocyanaten um handelsübliche Diisocyanate wie beispielsweise Diphenylmethandiisocyanat (MDI), Toluylendiisocyanat (TDI), 1,6-Hexamethylendiisocyanat (HDI) oder 1-Isocyanato-3,3,5-trimethyl-5-isocyanatomethyl-cyclohexan (IPDI).

Bei den Polyolen handelt es sich insbesondere um polymere Polyole, insbesondere di- oder trifunktionelle Polyole. Als polymere Polyole eignen sich typischerweise Polyetherpolyole, Polyesterpolyole, Polycarbonatpolyole sowie Mischungen dieser Polyole. Insbesondere weisen die polymeren Polyole ein Molekulargewicht im Bereicht von 500 bis 5000 g/mol auf.

Bei der Herstellung der erfindungsgemässen Zusammensetzung, wird der härtbare Strukturklebstoff mit elastomeraufbauenden Komponenten vermischt bis eine homogene Mischung erhalten wird. Umfasst der härtbare Strukturklebstoff als Epoxidharz **A** ein Epoxid-Festharz, erfolgt das Vermischen bei einer Temperatur über der Glasübergangstemperatur Tg des Epoxid-Festharzes.

Handelt es sich beim härtbaren Strukturklebstoff um eine hitzehärtende Epoxidharzzusammensetzung, kann diese vor der Zugabe des Härters **B** mit den elastomeraufbauenen Komponenten vermischt werden. Dadurch kann die Temperatur beim Vermischen bis oder sogar über die Aushärtungstemperatur der hitzehärtenden Epoxidharzzusammensetzung eingestellt werden, ohne dass es zu einer Aushärtung des Strukturklebstoffs kommt. Bei höheren Temperaturen wird in der Regel eine effizientere Vermischung erreicht.

Nachdem eine homogene Mischung erhalten wurde, erfolgt die Vernetzung der elastomeraufbauenden Komponenten, sodass sie ein Elastomer bilden, welches als durchdringendes Polymernetzwerk im Strukturklebstoff vorliegt.

In einer bevorzugten Ausführungsform der vorliegenden Erfindung, wird das chemisch vernetzte Elastomer aus Bestandteilen des härtbaren Strukturklebstoffs aufgebaut.

In dieser Ausführungsform weist die erfindungsgemässe Zusammensetzung ein chemisch vernetztes Elastomer auf, welches als durchdringendes Polymernetzwerk im Strukturklebstoff vorliegt, wobei dieses aufgebaut ist aus Epoxidharz **A** und mindestens einem zusätzlichen Härter **H** für Epoxidharze.

Der Härter **H** ist ein Molekül oder ein Polymer, welches mit Epoxidgruppen reaktive funktionelle Gruppen aufweist, wobei er insbesondere eine mittlere Funktionalität von > 2 bis 5 und ein mittleres Äquivalenzgewicht von 40

bis 2000 g/Eq aufweist. Als Funktionalität wird hierbei die Funktionalität gegenüber Epoxidgruppen verstanden.

Weiterhin liegt die Aktivierungstemperatur des Härters **H** unterhalb der Aktivierungstemperatur des Härters **B,** welcher vorhergehend beschrieben ist. Vorzugsweise liegt die Aktivierungstemperatur des Härters **H** mindestens 10°C, insbesondere mindestens 20°C, bevorzugt mindestens 30°C, unterhalb der Aktivierungstemperatur des Härters **B.**

Ferner liegt das stöchiometrische Verhältnis der Summe der reaktiven Gruppen von Härter **H** und Härter **B** zu den Epoxidgruppen des Epoxidharzes **A** im Bereich von ≥ 0.9:1.

Beim Härter **H** handelt es sich um ein Molekül oder um ein Polymer, welches mit Epoxidgruppen reaktive funktionelle Gruppen aufweist. Typischerweise handelt es sich um ein Polymer, wobei dieses Polymer insbesondere ausgewählt ist aus der Gruppe der bestehend aus Polyolefin, Polyether, Polyester, Fettsäure, Fettsäureamid und Acrylnitril-Butadien-Kautschuk mit einem Acrylnitrilanteil von ≥ 25 mol-%.

Für die vorliegende Erfindung ist es wichtig, dass der Härter **H** ein Grundgerüst aufweist, welches sich nicht von der übrigen Zusammensetzung, insbesondere also vom Epoxidharz **A** entmischt, so wie dies bekannte Elastomere, welche üblicherweise als Schlagzähigkeitsmodifikatoren zu Epoxidharzzusammensetzungen zugegeben werden, tun. Dies wäre beispielsweise der Fall bei Acrylnitril-Butadien-Kautschuk mit einem geringen Acrylnitrilanteil von insbesondere unter 25 mol-%.

Typischerweise sind derartige Härter **H** flexibilisierend.

Bei den mit Epoxidgruppen reaktiven funktionellen Gruppen des Härters **H** handelt es sich insbesondere um Amino-, Carboxyl-, Carboxylamid-, Hydroxyl- oder Anhydridgruppen. Vorzugsweise handelt es sich um Amino- oder Carboxylgruppen oder um phenolische Hydroxylgruppen, bevorzugt um Amino- oder Carboxylgruppen. Carboxylgruppen sind besonders bevorzugt, da die Zusammensetzung dann nach der Vernetzung mit dem Härter **H,** jedoch vor der Vernetzung mit dem Härter **B,** eine bessere Lagerstabilität aufweist. Der Grund dafür liegt darin, dass umgesetzte Amine, welche somit als tertiäre Amine in der Zusammensetzung vorliegen, die Homopolymerisation der Epoxidgruppen katalysieren können.

Die mittlere Funktionalität des Polymers liegt im Bereich von > 2 bis 5, insbesondere von 2.5 bis 5, bevorzugt von 3 bis 5. Das mittlere Äquivalenzgewicht des Polymers liegt im Bereich von 40 bis 1000 g/Eq insbesondere von 40 bis 1000, bevorzugt von 50 bis 800. Als Äquivalenzgewicht wird hierbei das Verhältnis des Molekulargewichts des gesamten Polymers, d.h. des Härters H, zur seiner Funktionalität, d.h. zur Anzahl der mit Epoxidgruppen reaktiven funktionellen Gruppen, bezeichnet

Meist bevorzugt handelt es sich beim Härter **H** um Diamine wie 4,9-Dioxadodecan-1,12-diamin oder Polyetherpolyamine, wie sie beispielsweise unter dem Handelsnamen Jeffamine®, insbesondere als Jeffamine® D-230 oder T-403, kommerziell erhältlich sind von Huntsman International LLC, USA, oder um Dimer- oder Trimerfettsäuren, wie sie beispielsweise unter dem Handelsnamen Pripol™, insbesondere Pripol™ 1040, kommerziell erhältlich sind von Croda International PLC, England, erhältlich sind.

Der Härter **B,** welcher auch in dieser bevorzugten Ausführungsform der erfindungsgemässen Zusammensetzung eingesetzt wird, ist bereits vorhergehend beschriebenen worden.

Insbesondere liegt das stöchiometrische Verhältnis der reaktiven Gruppen von Härter **H** zu den reaktiven Gruppen von Härter **B** im Bereich von ≥ 1:1.

Wesentlich ist für die erfindungsgemässe Zusammensetzung, dass sie als Formgedächtnis-Material ausgebildet ist, welches eine möglichst hohe Formstabilität in der temporären Form und ein möglichst vollständiges Rückstellvermögen aufweist. Konkret bedeutet dies, dass sich die erfindungsgemässe Zusammensetzung für eine möglichst lange Zeitdauer, typischerweise für länger als 6 Monate, in der temporären Form zu halten vermag und dass sich die Zusammensetzung bei Bedarf, durch Erwärmen über die Glasübergangstemperatur Tg der Zusammensetzung, vollständig ihre ursprüngliche Form wieder annimmt. Ein genügendes Rückstellvermögen ist typischerweise gegeben, wenn ein Probekörper aus einer erfindungsgemässen Zusammensetzung mit einer Höhe im Bereich von 5 bis 10 mm in seiner Höhe um 50% verformt wird und bei Bedarf wieder auf 80 bis 100% der ursprünglichen Höhe zurückgestellt werden kann.

Bei der bevorzugten Ausführungsform der vorliegenden Erfindung, wo die erfindungsgemässe Zusammensetzung ein chemisch vernetztes Elastomer aufweist, welches aufgebaut ist aus Epoxidharz **A** und mindestens einen Härter **H** für Epoxidharze, bedeutet dies, dass die Vernetzung des Epoxidharzes **A** mit dem Härter **H** diese Eigenschaften herbeiführen muss.

Hingegen ist darauf zu achten, dass die Vernetzung der restlichen Epoxidgruppen des Epoxidharzes **A** mit dem Härter **B** eine genügende Adhäsion des Strukturklebstoffs herbeiführt. Idealerweise beträgt in dieser Ausführungsform der Anteil der Härters **H** an der erfindungsgemässen Zusammensetzung nur gerade soviel, dass ein Formgedächtnis-Material mit den besagten Eigenschaften erhalten wird, damit so viele Epoxidgruppen des Epoxidharzes **A** wie möglich, für die Aushärtung mit dem Härter **B,** also für den Aufbau der Adhäsion, zur Verfügung stehen.

Die erfindungsgemässe Zusammensetzung, welche die bevorzugte Ausführungsform darstellt, wird hergestellt in einem Verfahren umfassend die Schritte:

- Mischen des Epoxidharzes **A** mit mindestens einem Härter **B;**

- Zugabe und Einmischen eines Härters **H;**
- Umsetzen des Epoxidharzes **A** mit dem Härter **H;**
  oder
- Mischen des Epoxidharzes **A** mit mindestens einem Härter H und einem Härter **B;**
- Umsetzen des Epoxidharzes **A** mit dem Härter **H** bei einer Temperatur unterhalb der Aktivierungstemperatur des Härters **B.**

Insbesondere handelt es sich beim Härter **H** um einen Härter, welcher bei Raumtemperatur oder bei einer deutlich tieferen Temperatur als Härter **B** mit dem Epoxidharz reagiert, wodurch zur Herstellung der erfindungsgemässen Zusammensetzung, also eines Formgedächtnis-Materials keine oder nur wenig Energie in Form von Wärme zugeführt werden muss.

In einem weiteren Aspekt betrifft die vorliegende Erfindung einen Formkörper, welcher einer reversiblen Formgebung unterzogen wurde, wobei die Formgebung die Schritte umfasst:

a) Erwärmen einer Zusammensetzung, wie sie vorhergehend beschrieben worden ist, auf eine Temperatur oberhalb ihrer Glasübergangstemperatur $T_g$;
b) Verformen der Zusammensetzung, unter Spannung des chemisch vernetzten Elastomers;
c) Abkühlen der verformten Zusammensetzung unter ihre Glasübergangstemperatur Tg.

Figur 1 zeigt schematisch die Herstellung eines erfindungsgemässen Formkörpers aus einer Zusammensetzung auf der Basis einer Epoxidharzzusammensetzung, wie sie vorhergehend beschrieben wurde.

Dabei liegt die feste Zusammensetzung 1 in ihrem Ausgangszustand Z1 in der ursprünglichen Form vor, in welcher sie beispielsweise bei ihrer Herstellung gebracht wurde. In einem ersten Schritt wird die Zusammensetzung dann um eine Temperatur $\Delta T_1$ auf eine Temperatur erwärmt, welche über ihrer Glasübergangstemperatur Tg liegt, jedoch, im Fall einer hitzehärtenden Epoxidharzzusammensetzung, unterhalb ihrer Aushärtungstemperatur. Befindet sich die Zusammensetzung in diesem Zustand Z2, wird sie unter Einwirkung einer Kraft F in ihre temporäre, noch verformbare Form 2 gebracht. In dieser temporären, noch verformbaren Form, wie sie in Zustand Z3 dargestellt ist, liegt das chemisch vernetzte Elastomer in gespannter Form vor. Die Zusammensetzung wird in dieser temporären Form gehalten und die Temperatur der Zusammensetzung wird wieder um die Temperatur $\Delta T_1$ auf eine Temperatur erniedrigt, welche unterhalb ihrer Glasübergangstemperatur Tg liegt. Dabei verfestigt sich die Zusammensetzung und liegt nun fest in ihrer temporären Form 3 vor, so wie es in Zustand Z4 gezeigt ist. In diesem Zustand als Formkörper ist die Zusammensetzung lagerstabil und kann weiter verarbeitet werden. So kann der Formkörper gestanzt oder geschnitten werden und/oder insbesondere an einem Träger angebracht oder in einem zu verstärkenden Hohlraum eines strukturellen Bauteils angeordnet werden.

Das Verformen der erfindungsgemässen Zusammensetzung, bei welcher sie in ihre temporäre Form gebracht wird, erfolgt typischerweise durch Pressen, Walzen, Ziehen und dergleichen. Wichtig ist beim Verformen, dass die Zusammensetzung im verformten Zustand auf eine Temperatur unterhalb ihrer Glasübergangstemperatur Tg abgekühlt werden kann, damit sie in ihrer temporären Form verbleibt.

In einem weiteren Aspekt betrifft die vorliegende Erfindung ein Verstärkungselement zur Verstärkung in Hohlräumen von strukturellen Bauteilen umfassend einen Träger, an welchem ein Formkörper gemäss vorhergehender Beschreibung angebracht ist.

Dieser Träger kann aus beliebigen Materialien bestehen. Insbesondere besteht der Träger aus einem aus einem Kunststoff, aus einem Metall oder aus einer Kombination von Kunststoff und Metall.

Bevorzugte Kunststoffe sind Polyurethane, Polyamide, Polyester und Polyolefine und Polyolefin-Copolymere, insbesondere hochtemperaturbeständige Polymere wie Poly(phenylenether), Polysulfone oder Polyethersulfone. Meist bevorzugte Kunststoffe sind Polyamide (PA) wie PA6 oder PA66, Polyethlyen und Polypropylen sowie Polystyrol und Copolymere wie Acrylnitril-Butadien-Styrol (ABS). Bevorzugte Metalle sind Aluminium, Stahl, Nickel und Legierungen dieser Metalle. Das Metall kann weiterhin unbehandelt vorliegen oder es kann mit geeigneten Mitteln, beispielsweise zur Verhinderung von Korrosion oder zur Verbesserung der Haftung vorbehandelt sein.

Der Träger kann weiterhin einen beliebigen Aufbau und eine beliebige Struktur aufweisen. Es kann beispielsweise massiv, hohl oder geschäumt sein oder eine gitterartige Struktur aufweisen. Die Oberfläche des Trägers kann typischerweise glatt, rau oder strukturiert sein.

Der Träger kann, zusätzlich zur seiner Funktion als Träger für die erfindungsgemässe Zusammensetzung bzw. dem aus ihr hergestellten Formteil, zur strukturellen Verstärkung oder zur Abdichtung des Bauteils oder auch zur Geräuschdämmung beitragen.

Der Träger kann weiterhin mindestens ein Befestigungsmittel, insbesondere einen Clip, zur Befestigung und Platzierung des Verstärkungselements in einem Hohlraum aufweisen. Die Befestigung des Verstärkungselements mit einem Clip eignet sich insbesondere für Anwendungen, bei welchen die gesamte Oberfläche des Bauteils, also auch

die Hohlrauminnenwand, beispielsweise für eine Tauchlackierung erreichbar sein muss. In solchen Fällen ist eine Befestigung beispielsweise durch Verkleben nicht geeignet, da der Lack die Stelle der Verklebung nicht erreichen kann.

Meist bevorzugt besteht der Träger aus einem Kunststoff, welcher mit einem Metall beschichtet ist. Als Kunststoff und als Metall sind dabei die vorhergehend beschriebenen Materialien bevorzugt.

Das Metall, mit welchem der Kunststoff beschichtet ist, kann dabei auf beliebige Art und Weise am Kunststoff befestigt sein. Beispielsweise erfolgt die Befestigung durch mechanische Befestigungsmittel wie Nägel, Schrauben, Nieten, mechanischen Clips, Klemmen, Bördeln und dergleichen, oder durch Verkleben des Metalls mit dem Kunststoff. Weiterhin kann das Metall auch mittels Kunststoffgalvanisierung auf den Kunststoff aufgetragen worden sein.

Meist bevorzugt beträgt die Schichtdicke der Metallschicht auf dem Kunststoffträger 0.03 bis 1.5 mm.

Der Träger aus Kunststoff, welcher mit einem Metall beschichtet ist, weist gegenüber einem reinen Metallträger den Vorteil auf, dass er einerseits leichter ist und dass er andererseits, durch die Eigenschaften des Kunststoffs wie die Wahl des Materials und dessen Verarbeitung, in seinen mechanischen Eigenschaften und in seiner Ausgestaltung sehr breit variiert werden kann. Der Vorteil der Metallbeschichtung gegenüber einem reinen Kunststoffträger ist, dass die Metalle in der Regel haftfreundlicher sind. Ein weiterer Vorteil der Metallbeschichtung ist, dass bei hitzehärtenden Strukturklebstoffen die Metallschicht sehr lokal und effizient durch Induktion erwärmt werden kann.

Figur 2 zeigt einen Träger 5 aus einem Kunststoff, welcher mit einem Metall 8 beschichtet ist. Das Metall ist dabei mit Nägeln 9 am Träger befestigt. Auf der Metallschicht befindet sich ein Formkörper 3, bestehend aus einer erfindungsgemässen Zusammensetzung in ihrem temporären Zustand.

Figur 3 zeigt schematisch ein Verstärkungselement, bestehend aus einem Träger 5, an welchem ein Formkörper 3 aus einer erfindungsgemässen Zusammensetzung mit hitzehärtender Epoxidharzzusammensetzung als Strukturklebstoff und chemisch vernetztem Elastomer in ihrer temporären Form, angebracht ist, in seinem Ausgangszustand Z4. In einem ersten Schritt wird der Formkörper 3 dann um eine Temperatur $\Delta T_1$ auf eine Temperatur erwärmt, welche über der Glasübergangstemperatur Tg der Zusammensetzung liegt, wobei sich das Elastomer entspannt und zu einer Verformung des Formkörpers bzw. der Zusammensetzung 1 in ihre ursprüngliche Form führt. Dies entspricht Zustand Z5 in Figur 3. Danach wird die Temperatur weiter um $\Delta T_2$ auf eine Temperatur erhöht, bei welcher die Zusammensetzung aushärtet. Die ausgehärtete Zusammensetzung 4 ist in Zustand Z6 gezeigt.

Die Temperaturerhöhung, welche zur Verformung des Formkörpers führt, und die Temperaturerhöhung zur Aushärtung des Strukturklebstoffs, müssen nicht zwingend zweistufig verlaufen. Es ist durchaus möglich, die beiden Schritte durch einen stetigen Temperaturanstieg nacheinander ablaufen zu lassen.

Weiterhin umfasst die Erfindung die Verwendung eines Verstärkungselements, wie es vorhergehend beschrieben wurde, zur Verstärkung in Hohlräumen von strukturellen Bauteilen. Vorzugsweise werden derartige strukturelle Bauteile in Karosserien und/oder Rahmen von Transport- und Fortbewegungsmitteln, insbesondere von Fahrzeugen zu Wasser oder zu Land oder von Luftfahrzeugen, eingesetzt. Bevorzugt umfasst die Erfindung die Verwendung eines erfindungsgemässen Verstärkungselements in Karosserien oder Rahmen von Automobilen, Lastkraftwagen, Eisenbahnwagen, Booten, Schiffen, Hubschraubern und Flugzeugen, meist bevorzugt in Automobilen.

Ein weiterer Aspekt der vorliegenden Erfindung betrifft ein Verfahren zur Verstärkung in Hohlräumen von strukturellen Bauteilen umfassend die Schritte:

a') Platzieren eines Verstärkungselements gemäss vorhergehender Beschreibung in den Hohlraum eines strukturellen Bauteils;
b') Erwärmen des Formkörpers 3 auf dem Verstärkungselement auf eine Temperatur oberhalb der Glasübergangstemperatur Tg der Zusammensetzung, wodurch der Formkörper in seine Form vor der Formgebung, also in die ursprüngliche Form, zurückgeht;
c') Aushärten des härtbaren Strukturklebstoffs.

In einer Ausführungsform des beschriebenen Verfahrens zur Verstärkung in Hohlräumen von strukturellen Bauteilen, bei welchem die Massgabe gilt, dass der Träger des Verstärkungselements aus einem durch Induktion erwärmbaren Metall oder aus einem Material besteht, welcher mit einem durch Induktion erwärmbaren Metall beschichtet ist, und mit der Massgabe, dass der härtbare Strukturklebstoff eine hitzehärtender Strukturklebstoff ist, werden die Schritte b') und c') durch Induktion, das heisst durch ein elektromagnetisches Wechselfeld einer Induktionsspule, bewirkt.

Figur 4 zeigt analog zu Figur 3 schematisch die Verstärkung in einem Hohlraum eines strukturellen Bauteils 6, wobei im Inneren des strukturellen Bauteils ein Verstärkungselement, bestehend aus einem Träger 5 und mehreren Formkörpern 3 aus einer erfindungsgemässen Zusammensetzung mit hitzehärtendem Strukturklebstoff und chemisch vernetztem Elastomer in ihrer temporären Form, angebracht ist. Der Träger des Verstärkungselements ist dabei mit einem Clip 7 am strukturellen Bauteil befestigt. Der Formkörper bzw. die Zusammensetzung liegt dabei in seiner temporären Form vor (Zustand Z4) und wird anschliessend um eine Temperatur $\Delta T_1$ auf eine Temperatur erwärmt, welche über der Glasübergangstemperatur Tg der Zusammensetzung liegt. Dabei entspannt sich das Elastomer und führt zu einer Verformung des Formkörpers bzw. der Zusammensetzung 1 in ihre ursprüngliche Form, wodurch der offen gelassene Spalt 10 zwischen Verstärkungselement und Hohlraum geschlossen wird und sich die erfindungsgemässe Zusammensetzung an die Hohlrauminnenwand haftet (Zustand Z5). Nach einer weiteren Temperaturerhöhung um eine Temperatur $\Delta T_2$ härtet der hitzehärtende Strukturklebstoff aus. Figur 4, Zustand Z6, zeigt das verstärkte strukturelle Bauteil mit der ausgehärteten Zusammensetzung 4.

Figur 5 zeigt ein Verstärkungselement, wie es in einem Hohlraum 10 eines strukturellen Bauteils 6 eingesetzt wird vor der Verformung des Formkörpers bzw. der erfindungsgemässen Zusammensetzung in ihrer temporären Form 3, welche sich auf einem Träger 5 befindet.

Figur 6 zeigt das Verstärkungselement aus Figur 5 wie es in einem Hohlraum eines strukturellen Bauteils 6 eingesetzt ist, wobei das Formteil bzw. die erfindungsgemässe Zusammensetzung in diesem Fall bereits in seine ursprüngliche Form zurückgegangen ist und an die Innenwände des strukturellen Bauteils 6 haftet. Weiterhin zeigt Figur 6 die ausgehärtete Zusammensetzung 4.

Die Form und Struktur erfindungsgemässer Verstärkungselemente kann gemäss ihrem Einsatzort beliebig gewählt werden.

Weiterhin betrifft die vorliegende Erfindung eine gehärtete Zusammensetzung, wie sie durch einen Härtungsvorgang, insbesondere durch Hitzehärtung, aus einer vorhergehend beschriebenen Zusammensetzung erhältlich ist.

## Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Formstabilität** des Materials in der temporären Form wurde während 7 Tagen bei Normklima (23°C / 50% Luftfeuchtigkeit) *("Relaxation")*, das **Rückstellvermögen** zur ursprünglichen Form nach 7 Tagen Lagerung bei Normklima bestimmt. Die Dimensionen der ursprünglichen Form der Probekörper misst 10x10x6 mm (LxBxH). Die Höhe in ursprünglicher Form ($H_0$) betrug also 6 mm. Durch Pressen bei erhöhter Temperatur und anschliessendem Abkühlen wurden die Probekörper in die temporäre Form mit einer Höhe von 3 mm gebracht ($H_{Temp}$), was einer Kompression von 50 % entspricht und somit beim Rückstellvorgang einen Höhengewinn von 100 % erlaubt.

Die Relaxation ist hier definiert als:

$$Relaxation\ [\%] = \frac{H_{Temp}(Tag\ 7) - H_{Temp}(Tag\ 0)}{H_{Temp}(Tag\ 0)} \cdot 100$$

Das Rückstellvermögen ist bestimmt als:

$$Rückstellvermögen\ [\%] = \frac{H_0(Tag\ 7,\ nach\ Aushärtung)}{H_0(Tag\ 0)} \cdot 100$$

### Herstellung der Probekörper

Beispiel ***1*** repräsentiert einen Strukturklebstoff auf Basis einer Epoxidharzzusammensetzung und einem chemisch vernetzen Elastomer, welches aufgebaut ist aus Bestandteilen des Epoxidharzes.

Die Formulierung ***1*** sowie der Referenzschaum **Ref** wurden hergestellt durch Vermischen der Bestandteile gemäss Tabelle 1 in den entsprechenden Gewichtsprozenten auf einem Doppelschneckenextruder bei Temperaturen oberhalb der Schmelztemperatur des jeweils verwendeten thermoplastischen Elastomeren bzw. unterhalb der Zersetzungstemperatur des chemischen Treibmittels (***Ref***).

Der Strukturklebstoff wurde bei allen Probekörpern während 60 min bei 180°C ausgehärtet.

Tabelle 1 Formulierung ***1*** und Referenzschaum ***Ref*** in Gew.-% sowie Resultate;

| | ***Ref*** | ***1*** |
|---|---|---|
| Araldite® GT 7004 [a)] | 85.4 | |
| Araldite® GY 250 [a)] | | 77.2 |
| Dicyandiamid [b)] | 1.6 | 1.5 |
| Jeffamine® D-230 [a)] | | 13.5 |
| Armeen® CD [c] | | 7.8 |
| Luvopor® OB [d)] | 3 | |
| Aerosil® [e)] | 10 | |
| Relaxation [%] | - | 5 |
| Rückstellvermögen [%] | - | 100 |

[a)] erhältlich von Huntsman Advanced Materials (Schweiz) GmbH;
[b)] erhältlich von AlzChem GmbH, Deutschland;
[c)] erhältlich von Akzo Nobel Surface Chemistry AB, Schweden;
[d)] erhältlich von Lehmann&Voss&Co, Deutschland;
[e)] erhältlich von Wacker Chemie AG, Deutschland.

**Bezugszeichenliste**

| | |
|---|---|
| 1 | Zusammensetzung in der ursprünglichen Form |
| 2 | Zusammensetzung (verformbar) |
| 3 | Formkörper (temporäre Form) |
| 4 | Ausgehärtete Zusammensetzung |
| 5 | Träger |
| 6 | strukturelles Bauteil |
| 7 | Clip |
| 8 | Metallschicht |
| 9 | Nagel |
| 10 | Spalt |
| Z1 | Zustand der Zusammensetzung in ursprünglicher Form |
| Z2 | Zustand der verformbaren Zusammensetzung |
| Z3 | Zustand der Zusammensetzung im temporären Zustand (Formkörper) |
| Z4 | Zustand der ausgehärteten Zusammensetzung |
| $\Delta LT_1$ | Temperaturunterschied zwischen Temperatur unterhalb von Tg der Zusammensetzung und Temperatur oberhalb des Tg der Zusammensetzung |

$\Delta T_2$ Temperaturunterschied zwischen Temperatur oberhalb von Tg der Zusammensetzung und der Aushärtungstemperatur der Zusammensetzung

## Patentansprüche

**1.** Zusammensetzung umfassend

i) mindestens einen härtbaren Strukturklebstoff; sowie
ii) mindestens ein chemisch vernetztes Elastomer;
**dadurch gekennzeichnet, dass** das chemisch vernetzte Elastomer als durchdringendes Polymernetzwerk im Strukturklebstoff vorliegt.

**2.** Zusammensetzung gemäss Anspruch 1, **dadurch gekennzeichnet, dass** der härtbare Strukturklebstoff eine hitzehärtende Epoxidharzzusammensetzung, umfassend mindestens ein Epoxidharz **A** und mindestens einen Härter **B** für Epoxidharze, welcher durch erhöhte Temperatur aktiviert wird, ist.

**3.** Zusammensetzung gemäss einem der vorhergehenden Ansprüche, erhältlich durch

- Mischen von mindestens einem härtbaren Strukturklebstoff mit elastomeraufbauenden Komponenten;
- Vernetzen der elastomeraufbauenden Komponenten in der Mischung zu einem Elastomer, sodass ein durchdringendes Polymernetzwerk im Strukturklebstoff entsteht.

**4.** Zusammensetzung gemäss Anspruch 3, **dadurch gekennzeichnet, dass** die elastomeraufbauenden Komponenten ausgewählt sind aus der Gruppe bestehend aus

- mindestens einem natürlichen oder synthetischen Kautschuk sowie mindestens einem Vernetzer für Kautschuk; und
- mindestens einem Polyisocyanat sowie mindestens einem Polyol.

**5.** Zusammensetzung gemäss Anspruch 2, **dadurch gekennzeichnet, dass** das chemisch vernetzte Elastomer, welches als durchdringendes Polymernetzwerk im Strukturklebstoff vorliegt, aufgebaut ist aus Epoxidharz **A** und mindestens einem zusätzlichen Härter **H** für Epoxidharze,

- wobei der Härter **H** ein Molekül oder ein Polymer ist, welches mit Epoxidgruppen reaktive funktionelle Gruppen aufweist, wobei es eine mittlere Funktionalität von > 2 bis 5 und ein mittleres Äquivalenzgewicht von 40 bis 2000 g/Eq aufweist;
- wobei die Aktivierungstemperatur des Härters **H** unterhalb der Aktivierungstemperatur des Härters **B** liegt; und
- wobei das stöchiometrische Verhältnis der Summe der reaktiven Gruppen von Härter **H** und Härter **B** zu den Epoxidgruppen des Epoxidharzes **A** im Bereich von ≥ 0.9:1 liegt.

**6.** Zusammensetzung gemäss Anspruch 5, **dadurch gekennzeichnet, dass** das stöchiometrische Verhältnis der reaktiven Gruppen von Härter **H** zu den reaktiven Gruppen von Härter **B** im Bereich von ≥ 1:1 liegt.

**7.** Zusammensetzung gemäss Anspruch 5, **dadurch gekennzeichnet, dass** der Härter **H** ein Amino- oder Carboxylgruppen aufweisendes Polymer ist, wobei das Polymer ausgewählt ist aus der Gruppe der bestehend aus Polyolefin, Polyether, Polyester, Fettsäure, Fettsäureamid und Acrylnitril-Butadien-Kautschuk mit einem Acrylnitrilanteil von ≥ 25 mol-%.

**8.** Zusammensetzung gemäss Anspruch 7, **dadurch gekennzeichnet, dass** der Härter **H** ein Polyetherpolyamin ist.

**9.** Verfahren zur Herstellung einer Zusammensetzung gemäss Anspruch 5 umfassend die Schritte:

- Mischen des Epoxidharzes **A** mit mindestens einem Härter **B;**
- Zugabe und Einmischen eines Härters **H;**
- Umsetzen des Epoxidharzes **A** mit dem Härter **H;**
oder
- Mischen des Epoxidharzes **A** mit mindestens einem Härter **H** und einem Härter **B;**

- Umsetzen des Epoxidharzes **A** mit dem Härter **H** bei einer Temperatur unterhalb der Aktivierungstemperatur des Härters **B.**

**10.** Formkörper (3), **dadurch gekennzeichnet, dass** er einer reversiblen Formgebung unterzogen wurde, wobei die Formgebung die Schritte umfasst

- Erwärmen einer Zusammensetzung gemäss einem der Ansprüche 1 bis 8 auf eine Temperatur oberhalb ihrer Glasübergangstemperatur $T_g$;
- Verformen der Zusammensetzung, unter Spannung des chemisch vernetzen Elastomers;
- Abkühlen der verformten Zusammensetzung unter ihre Glasübergangstemperatur $T_g$.

**11.** Verstärkungselement zur Verstärkung in Hohlräumen von strukturellen Bauteilen umfassend einen Träger (5), an welchem ein Formkörper (3) gemäss Anspruch 10 angebracht ist.

**12.** Verstärkungselement gemäss Anspruch 11, **dadurch gekennzeichnet, dass** der Träger (5) aus einem Kunststoff besteht, welcher mit einem Metall beschichtet ist.

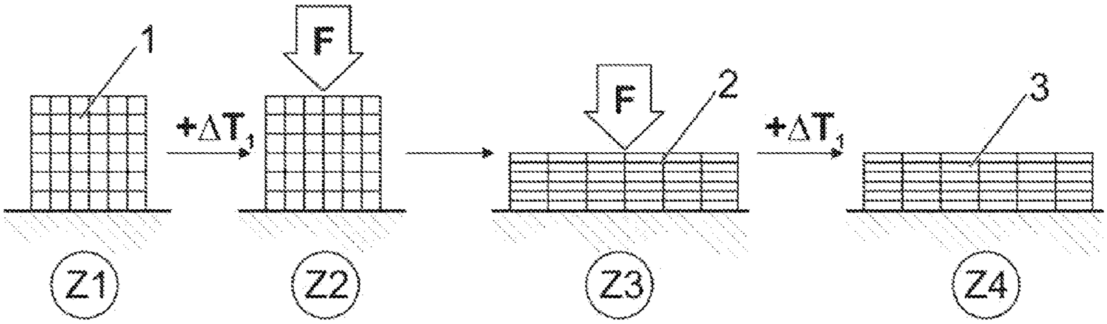


Figur 1

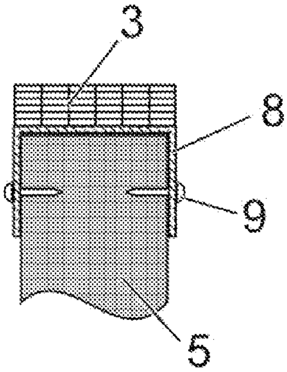


Figur 2

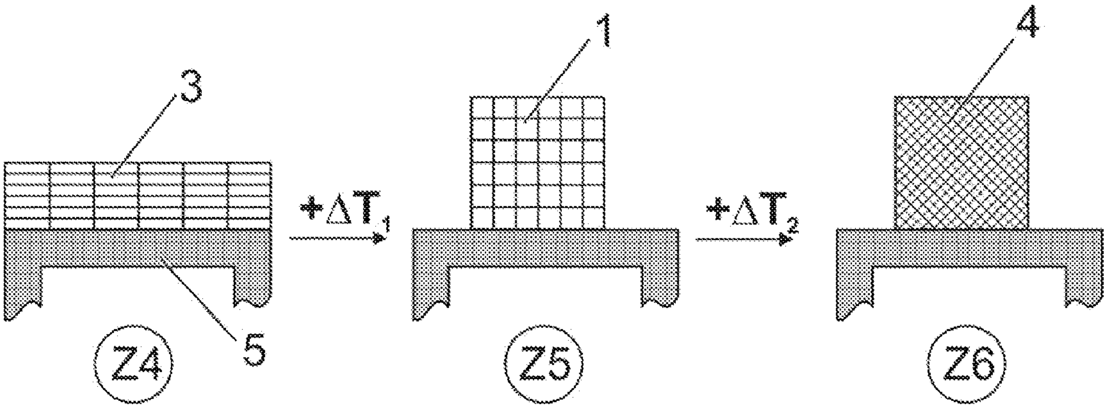


Figur 3

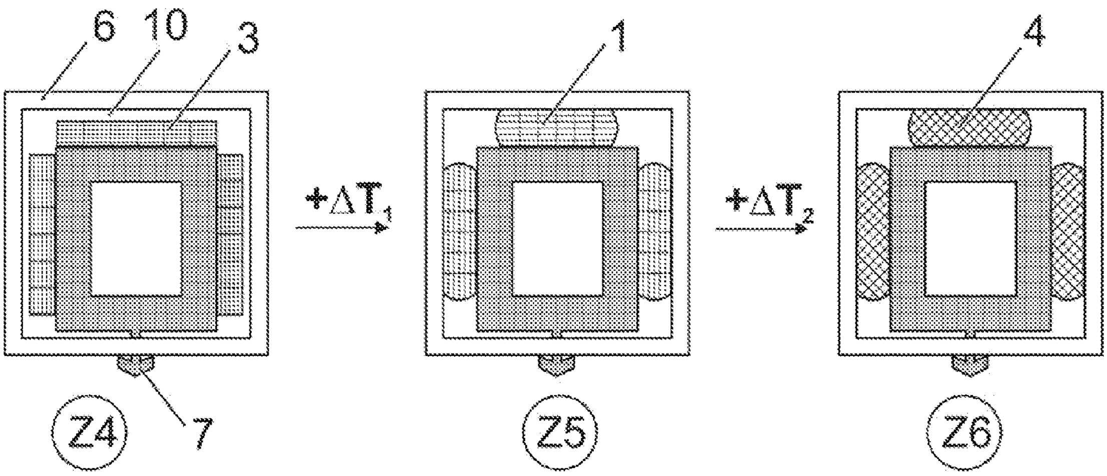


Figur 4

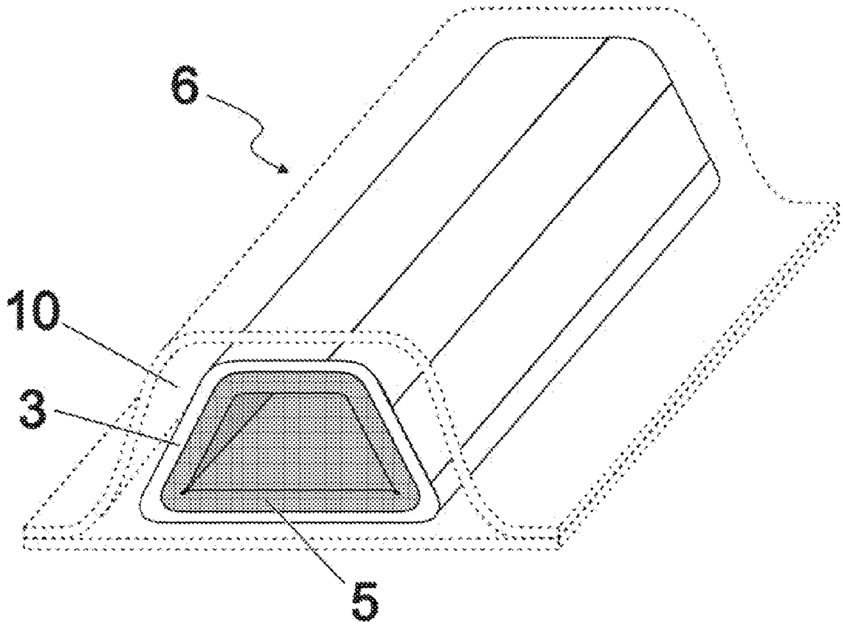


Figur 5

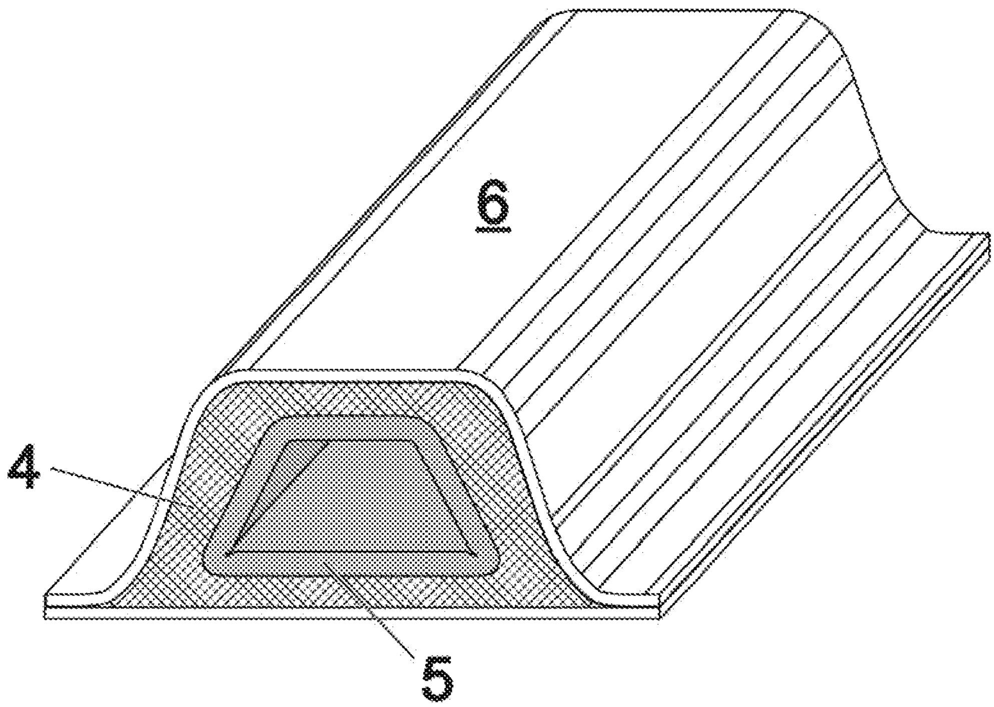


Figur 6

Europäisches Patentamt
European Patent Office
Office européen des brevets

## EUROPÄISCHER RECHERCHENBERICHT

Nummer der Anmeldung
EP 10 15 8077

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 2 182 025 A1 (SIKA TECHNOLOGY AG [CH]) 5. Mai 2010 (2010-05-05) * Beispiele 1,2,8; Tabellen 2,3 * | 1-3 | INV. C09J163/00 C09J175/00 |
| X | EP 1 155 084 A1 (SIKA CORP [US]) 21. November 2001 (2001-11-21) * Beispiele 1,2 * | 1-3 | |
| A | WO 2009/016106 A1 (SIKA TECHNOLOGY AG [CH]; FINTER JUERGEN [CH]; BLANK NORMAN [CH]; BURCH) 5. Februar 2009 (2009-02-05) * das ganze Dokument * | 1-12 | |
| X | WO 00/02968 A1 (3M INNOVATIVE PROPERTIES CO [US]) 20. Januar 2000 (2000-01-20) * Beispiele 1,2 * | 1-3 | |
| X | R. E. TOUHSAENT, D. A. THOMAS, AND L. H. SPERLING: "EPOXY/ACRYLIC SIMULTANEOUSINTERPENETRATING NETWORKS" J. POLYMER SCI.: SYMPOSIUM, Nr. 46, 1974, Seiten 175-190, XP002597611 * Seite 177 - Seite 178 * | 1-3 | RECHERCHIERTE SACHGEBIETE (IPC): C09J |

Der vorliegende Recherchenbericht wurde für alle Patentansprüche erstellt

| Recherchenort | Abschlußdatum der Recherche | Prüfer |
|---|---|---|
| München | 24. August 2010 | Marquis, Damien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2
EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 15 8077

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2010

| Im Recherchenbericht angeführtes Patentdokument | Datum der Veröffentlichung | Mitglied(er) der Patentfamilie | Datum der Veröffentlichung |
|---|---|---|---|
| EP 2182025 A1 | 05-05-2010 | CN 101724225 A | 09-06-2010 |
| | | KR 20100048943 A | 11-05-2010 |
| | | US 2010108258 A1 | 06-05-2010 |
| EP 1155084 A1 | 21-11-2001 | AT 269881 T | 15-07-2004 |
| | | AU 1319900 A | 29-05-2000 |
| | | CA 2349891 A1 | 18-05-2000 |
| | | DE 69918335 D1 | 29-07-2004 |
| | | DE 69918335 T2 | 25-08-2005 |
| | | ES 2229789 T3 | 16-04-2005 |
| | | JP 2002529566 T | 10-09-2002 |
| | | WO 0027920 A1 | 18-05-2000 |
| | | US 6387470 B1 | 14-05-2002 |
| | | US 6368438 B1 | 09-04-2002 |
| WO 2009016106 A1 | 05-02-2009 | EP 2019027 A1 | 28-01-2009 |
| | | EP 2183150 A1 | 12-05-2010 |
| WO 0002968 A1 | 20-01-2000 | AU 4732199 A | 01-02-2000 |
| | | CN 1308662 A | 15-08-2001 |
| | | DE 69934230 T2 | 11-10-2007 |
| | | EP 1098945 A1 | 16-05-2001 |
| | | JP 2002520441 T | 09-07-2002 |
| | | US 7005394 B1 | 28-02-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 08168009 A
- US 6322890 B


### In der Beschreibung aufgeführte Nicht-Patentliteratur


- IUPAC Compendium of Chemical Terminology. 1997